# EUROPEAN PATENT APPLICATION

(11) **EP 2 664 792 A1**
(43) Date of publication of application: **20.11.2013**
(21) Application number: 12734697.1
(22) Date of filing: 12.01.2012
(51) Int. Cl.: F03G 7/06

(54) **METHOD FOR MANUFACTURING THIN FILM ACTUATOR**

(30) Priority: 13.01.2011 JP 2011004904
(71) Applicant: National Institute for Materials Science, Tsukuba-shi, Ibaraki 305-0047 (JP)
(72) Inventor: ISHIDA Akira, Tsukuba-shi Ibaraki 305-0047 (JP)
(74) Representative: Hall, Matthew Benjamin
(86) International application number: PCT/JP2012/050498
(87) International publication number: WO 2012/096348

(57) **Abstract**

A task of the invention is to provide a method for producing a thin film actuator which is advantageous not only in that the thin film actuator can be largely changed in shape and easily controlled in the magnitude and direction of the change of shape, but also in that the thin film actuator is suppressed with respect to the deterioration of performance caused due to the use of the actuator, and the task is achieved by a method for producing a thin film actuator, which comprises fixing a stacked thin film 23 having a resin thin film 21 and a shape memory alloy thin film 22 stacked on one another to a shaping die member, and heating and maintaining the stacked thin film in a state in which the resultant shape of the stacked thin film is restrained to cause only the resin thin film to suffer predetermined creep deformation.

## Description

### Technical Field

The present invention relates to a method for producing a thin film actuator. Particularly, the invention is concerned with a method for producing a thin film actuator having a shape memory alloy thin film and a resin thin film and having a two-way shape memory effect.

### Background Art

In recent years, studies on a stacked actuator having a shape memory alloy thin film and a resin stacked on one another are being vigorously made.
For example, Non-patent Literature 1 relates to a stacked actuator having a shape memory alloy thin film and a resin stacked on one another, and has a description of a method for imparting a two-way shape memory effect to a stacked actuator utilizing thermal strain generated during the cooling process from the deposition temperature for the shape memory alloy.
The two-way shape memory effect is an effect such that two different shapes are reproduced by heating and cooling.

The shapes of the stacked actuator formed by the above method at a high temperature and at a low temperature are determined from the formula: (Difference in thermal expansion coefficient between the shape memory alloy and the resin) x (Deposition temperature - Room temperature). However, the deposition temperature is substantially fixed, and therefore the change of shape of the stacked actuator between a high temperature and a low temperature is substantially unchangeable.
The above-mentioned change of shape can be increased by using a resin of a type having a large thermal expansion coefficient as a resin constituting the base material of the actuator. When a resin having a large thermal expansion coefficient is used, however, a problem is caused in that the resin fixed to a substrate holder at room temperature suffers deformation, such as deflection, upon being heated to the deposition temperature, so that the stacked actuator cannot be kept in a predetermined shape, making it difficult to control the change of the shape.

Patent Literature 1 relates to a two-way shape memory alloy thin film actuator and a method for producing a shape memory alloy thin film used in the actuator, and has a description of another method for imparting a two-way shape memory effect to a stacked actuator, namely, a method in which a substrate is caused to suffer plastic deformation within the rearrangement deformation region of the martensite phase variant of the shape memory alloy thin film.
However, in the known technique of this document, plastic deformation is also introduced to the substrate during the use of the actuator, and a problem arises in that the performance of the stacked actuator deteriorates as the stacked actuator is used.
Further, in the known technique of this document, it is necessary that the substrate suffer plastic deformation in a low temperature range in which the shape memory alloy thin film exhibits a martensite phase, and there is a problem in that polyimide or the like which exhibits large elastic deformation at room temperature cannot be used as the substrate.

### Citation List

### Patent Literature

[Patent Literature 1] International Patent Application Publication No. W02008/142980

### Non-patent Literature

[Non-patent Literature 1] A. Ishida, M. Sato: Thin Solid Films 516 (2008) 7836-7839.

### Summary of Invention

### Technical Problem

A task of the invention is to provide a method for producing a thin film actuator which is advantageous not only in that the thin film actuator can be largely changed in shape and easily controlled in the magnitude and direction of the change of shape, but also in that the thin film actuator is suppressed with respect to the deterioration of performance caused due to the use of the actuator.

### Solution to Problem

The invention has the following construction.
(1) A method for producing a thin film actuator, which comprises fixing a stacked thin film having a resin thin film and a shape memory alloy thin film stacked on one another to one side of a shaping die member, and heating the stacked thin film in a state in which the resultant shape of the stacked thin film is restrained to a temperature which is the softening temperature (creep deformation starting temperature) of the resin thin film or higher and lower than the heat resistance temperature of the resin thin film and maintaining the stacked thin film at the temperature to cause only the resin thin film to suffer predetermined creep deformation.
(2) The method for producing a thin film actuator according to item (1) above, wherein the stacked thin film is fixed to one side of the die member by a fixing member in a state in which the stacked thin film is pressed against the one side of the die member.
(3) The method for producing a thin film actuator according to item (2) above, wherein the die member has a convex portion on one side thereof and the fixing member has a concave portion, wherein the concave portion is fitted to the convex portion in a state in which the stacked thin film is pressed against one side of the die member to fix the stacked thin film to the one side of the die member.
(4) The method for producing a thin film actuator according to any one of items (1) to (3) above, wherein the shape of the stacked thin film is restrained so that the strain of the stacked thin film becomes less than 2% which is the elastic limit of the shape memory alloy thin film
(5) The method for producing a thin film actuator according to any one of items (1) to (4) above, wherein the stacked thin film is formed by depositing the shape memory alloy thin film on the resin thin film.
(6) The method for producing a thin film actuator according to any one of items (1) to (4) above, wherein the stacked thin film is formed by applying the resin thin film to the shape memory alloy thin film or by bonding the resin thin film to the shape memory alloy thin film using a bonding agent.
(7) The method for producing a thin film actuator according to any one of items (1) to (6) above, wherein the resin thin film is a polyimide film.
(8) The method for producing a thin film actuator according to any one of items (1) to (7) above, wherein the temperature for restraint heating is a temperature in the range of from 60 to less than 450°C.
(9) The method for producing a thin film actuator according to any one of items (1) to (8) above, wherein the shape memory alloy thin film is a TiNi alloy thin film or a TiNiCu alloy thin film.
(10) The method for producing a thin film actuator according to any one of items (1) to (9) above, wherein the total film thickness of the shape memory alloy thin film and the resin thin film is less than 400 µm.
(11) The method for producing a thin film actuator according to any one of items (1) to (10) above, wherein one or more layers of another thin film are stacked on the stacked thin film.

### Advantageous Effects of Invention

The method of the invention for producing a thin film actuator has a construction such that a stacked thin film having a resin thin film and a shape memory alloy thin film stacked on one another is fixed to a shaping die member and heated and maintained in a state in which the resultant shape of the stacked thin film is restrained, and therefore, even after released from the restraint, an internal stress is caused due to a difference in shape between the resin thin film, which has suffered creep deformation in the process of restraint heating to be changed in shape, and the shape memory alloy thin film, which has suffered only elastic deformation and has not been changed in shape, and the internal stress serves as a bias force to impart a two-way shape memory effect to the stacked thin film. Thus, there can be provided a method for producing a thin film actuator which is advantageous not only in that the thin film actuator can be largely changed in shape and easily controlled in the magnitude and direction of the change of shape, but also in that the thin film actuator is suppressed with respect to the deterioration of performance caused due to the use of the actuator.

### Brief Description of Drawings

[Fig. 1] Views showing an example of a stacked thin film obtained immediately after deposited.
[Fig. 2] View showing an example of a stacked thin film fixed to a die member.
[Fig. 3] Views showing another example of a stacked thin film fixed to a die member.
[Fig. 4] View showing strain generated in the curved thin film.
[Fig. 5] Graph showing a change with temperature of the load required for maintaining the 2% tensile deformation of a polyimide film (Kapton 100EN (registered trademark of DuPont-Toray Co., Ltd.)).
[Fig. 6] Graph showing a change with time of the load required for maintaining the 2% tensile deformation at 200°C of a polyimide film (Kapton 100EN (registered trademark of DuPont-Toray Co., Ltd.)).
[Fig. 7] Graph showing stress-strain curves of a Ti_{48.5}Ni_{51.5} alloy thin film at 93°C, 143°C, and 194°C.
[Fig. 8] Side views showing the action of the thin film actuator in the invention.
[Fig. 9] Perspective views showing another example of the thin film actuator in the invention.
[Fig. 10] Perspective views showing still another example of the thin film actuator in the invention.
[Fig. 11] Photographs showing Test Examples 1 to 4.
[Fig. 12] Photographs showing Test Examples 5 to 8.
[Fig. 13] Photographs showing a stacked thin film obtained immediately after deposited.
[Fig. 14] Photographs showing the Example.

### Mode for Carrying Out the Invention

### (First embodiment of the invention)

Hereinbelow, the method for producing a thin film actuator according to the first embodiment of the invention will be described with reference to the accompanying drawings.

The method for producing a thin film actuator according to the embodiment of the invention has a step for fixing a stacked thin film, which is formed by stacking a resin thin film and a shape memory alloy thin film on one another, to a shaping die member and heating and maintaining the stacked thin film in a state in which the resultant shape of the stacked thin film is restrained.
As the resin thin film and the shape memory alloy thin film, for example, polyimide and a TiNi alloy thin film or a TiNiCu alloy thin film are respectively used.

As examples of methods for stacking the resin thin film and the shape memory alloy thin film on one another to form a stacked thin film, there can be mentioned a method of depositing the shape memory alloy thin film on the resin thin film, and a method of applying the resin thin film to the shape memory alloy thin film or bonding the resin thin film to the shape memory alloy thin film using a bonding agent.

As an example of the method of depositing the shape memory alloy thin film on the resin thin film, there can be mentioned a sputtering method. An alloy target or a plurality of pure metal targets are sputtered in an Ar gas atmosphere under a low pressure to deposit a shape memory alloy thin film on a polyimide substrate. Alternatively, an electron beam deposition method can be used.

In the method of applying the resin thin film to the shape memory alloy thin film, a shape memory alloy is first rolled or quenched and solidified to prepare a shape memory alloy thin film.
Then, a resin is applied to one surface of the above-prepared shape memory alloy thin film by a spin coating method, a dipping method, or the like, and the applied resin is dried to form a stacked thin film.

Further, in the method of bonding the resin thin film to the shape memory alloy thin film using a bonding agent, a shape memory alloy thin film is first prepared in the same manner as in the application method mentioned above.
Then, a bonding agent is applied to one surface of the prepared shape memory alloy thin film, and a resin thin film is disposed on the applied bonding agent and pressed against it, followed by drying, to form a stacked thin film.

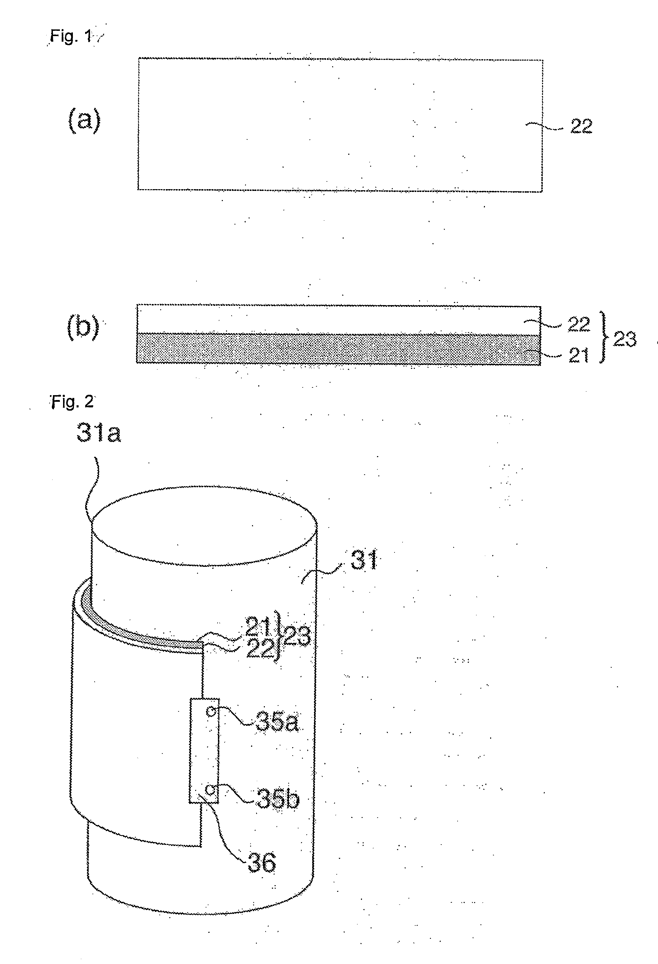

Figs. 1 (a) and 1 (b) show views of a stacked thin film obtained immediately after formed, wherein Fig. 1(a) is a plan view and Fig. 1(b) is a side view.
As shown in Figs. 1(a) and 1(b), a stacked thin film 23 obtained immediately after formed has stacked on one another a resin thin film 21 in a rectangular form as viewed on the plane and a shape memory alloy thin film 22 in a rectangular form as viewed on the plane, and, when no thermal strain is present in the stacked thin film, force is not exerted between the resin thin film 21 and the shape memory alloy thin film 22, and therefore the shape of the stacked thin film is flat.

The shape memory alloy thin film 22 comprises a material capable of undergoing elastic deformation upon restraint heating. Further, it is desired that the transformation temperature of the shape memory alloy thin film 22 is the creep deformation starting temperature (softening temperature) of the below-mentioned resin or lower.
As the shape memory alloy thin film 22, a TiNi alloy thin film or a TiNiCu alloy thin film is preferred. The transformation temperature of these alloy thin films falls within 30 to 50°C and is lower than 60°C which is the creep deformation starting temperature of a polyimide resin.

It is desired that the resin thin film 21 has a softening temperature higher than the transformation temperature of the shape memory alloy thin film. Polyimide has a heat resistance temperature as high as 450°C, which enables restraint heating at a high temperature. In addition, polyimide has a creep deformation starting temperature (softening temperature) of 60°C, which is higher than the transformation temperature of the shape memory alloy thin film, and therefore a problem that plastic strain is introduced to the resin thin film portion during the use of the actuator does not occur, and thus the deterioration of performance of the thin film actuator caused due to the use of the actuator can be suppressed.

One or more layers of another thin film, such as a shape memory alloy thin film or a metal thin film, may be stacked on the stacked thin film.

A step for subjecting the stacked thin film 23 obtained immediately after formed to restraint heating is described below.
The restraint heating is a treatment such that the stacked thin film is heated to a temperature which is the creep deformation starting temperature of the resin thin film or higher and lower than the heat resistance temperature of the resin thin film in a state in which the stacked thin film is fixed to one side of a die member.

As shown in Fig. 2, the stacked thin film 23 is first wound round the sidewall of a cylindrical die member 31 and the end of the stacked thin film 23 is fastened by a fixing member 36, and then the fixing member 36 is fixed using screws 35a, 35b. The other end of the stacked thin film 23, though not shown in Fig. 2, is similarly fixed using a fixing member and screws.

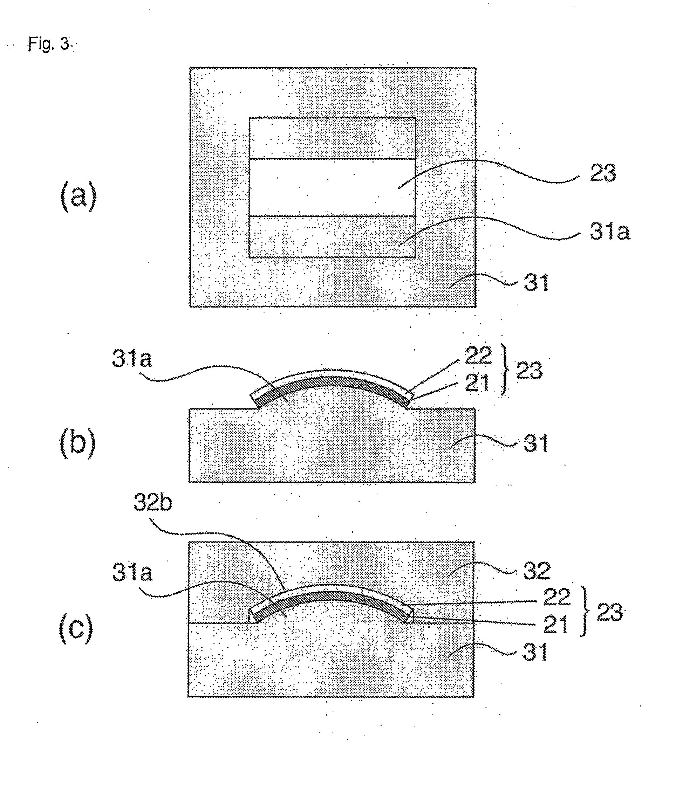

The fixing method is not limited to the method described above. Figs. 3(a), 3(b) and 3(c) show views explaining another fixing method. Figs. 3(a) and 3(b) are views showing a point in time when the stacked thin film is disposed on a die member, and are, respectively, a plan view and a side view. The stacked thin film 23 obtained immediately after deposited is first disposed on a die member 31 so as to cover a convex portion 31 a of the die member 31. Then, as shown in Fig. 3(c), a concave portion 32b of a fixing member 32 is fitted to the convex portion 31a in a state in which the stacked thin film 23 is disposed on one side of the die member 31 to fix the stacked thin film 23 to the one side of the die member 31. When a thin film actuator in a complicated shape is formed, this method is preferred.

The shape restrained is not particularly limited, and can be an arbitrary shape.
However, it is preferred that the shape of the stacked thin film is restrained so that the strain of the stacked thin film deformed becomes less than 2%. When the strain of the stacked thin film is less than 2%, the shape memory alloy thin film 22 undergoes merely elastic deformation without suffering plastic deformation, and the combination of the thus deformed shape memory alloy thin film and the resin thin film 21 which has suffered creep deformation into a predetermined shape can exhibit a two-way shape memory effect. The magnitude of the change of shape of the thin film actuator 23 can be controlled by adjusting the creep deformation during the restraint heating for the stacked thin film. The larger the creep deformation in the stacked thin film being restrained, the larger the change of shape of the thin film actuator.
When the strain of the stacked thin film deformed is 2% or more, there is disadvantageously a danger that plastic deformation is introduced to the shape memory alloy thin film 22, causing the effect of the restraint heating to gradually become poor.

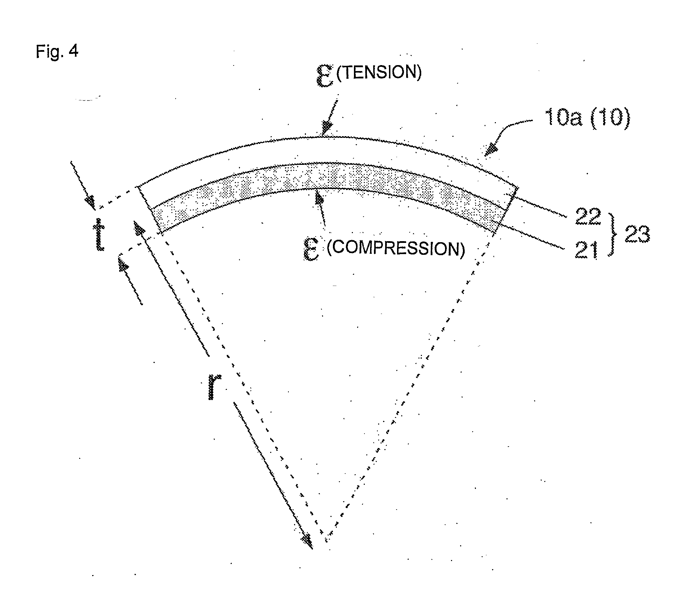

When a thin film having a thickness t is curved at a curvature radius r and the curved shape is restrained, the maximum strain ε is generated in the surface of the thin film as shown in Fig. 4, and determined from: ε = t/2r. The strain given to the thin film by the restraint heating is desirably less than 2%, and therefore it is desired that the relationship: t/2r < 0.02 is satisfied, that is, the thickness t of the stacked thin film 23, i.e., the total thickness of the shape memory alloy thin film 22 and the resin thin film 21 is less than 4% of the curvature radius r for restraint.

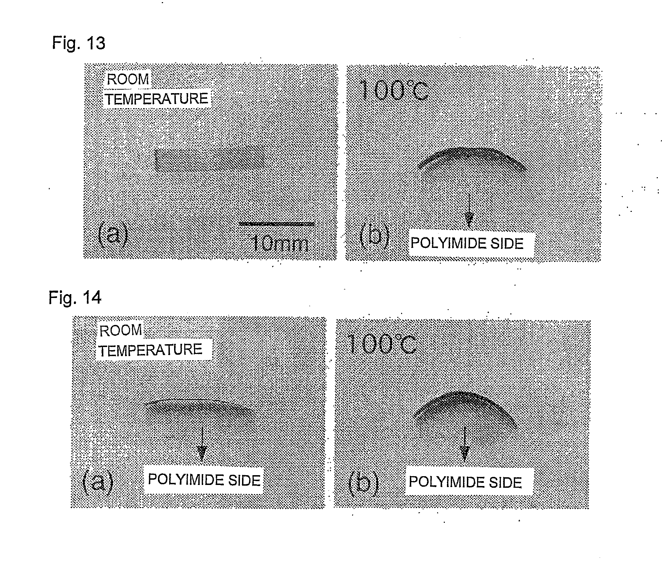

A conventional change of the shape of a stacked thin film utilizing thermal strain is about 10 mm in terms of a curvature radius as seen in Figs. 13(a) and 13(b). Therefore, for obtaining a larger change of the shape, the stacked thin film is desirably restrained at a curvature radius smaller than 10 mm, and, in such a case, it is desired that the thickness of the stacked thin film, i.e., the total thickness of the shape memory alloy thin film and the resin film is less than 400 µm.

The stacked thin film 23 fixed to the die member 31 is then placed in an oven and heated to a temperature which is the creep deformation starting temperature of the resin thin film 21 or higher and lower than the heat resistance temperature of the resin thin film 21. The stacked thin film 23 is not particularly required to be maintained at a high temperature, but, when maintained at a high temperature, the creep deformation of the resin thin film is promoted, further increasing the effect of the restraint heating.

It is preferred that the temperature for restraint is the creep deformation starting temperature of the resin thin film 21 or higher and lower than the heat resistance temperature of the resin thin film 21. When the temperature for restraint is in the range of the creep deformation starting temperature or higher, the resin thin film 21 is likely to rapidly undergo plastic deformation, making it possible to easily cause the resin thin film 21 to suffer plastic deformation. Further, when the temperature for restraint is lower than the heat resistance temperature of the resin thin film 21, the structure of the resin thin film 21 can be kept stable without suffering destruction.

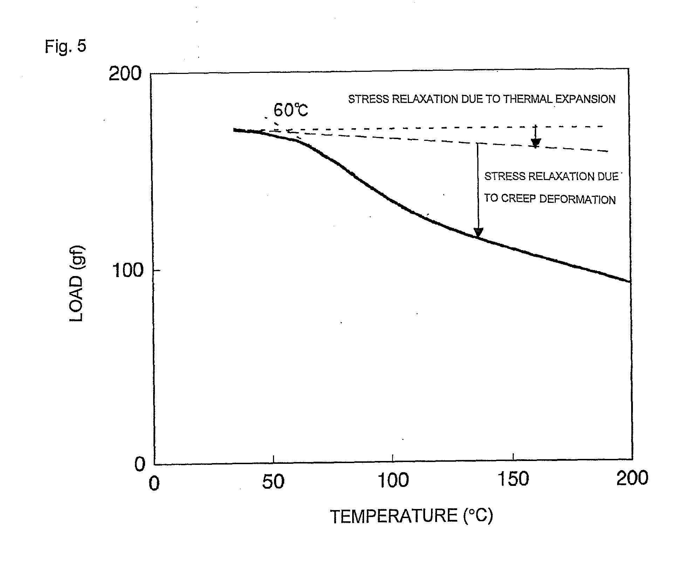

When polyimide is used as the resin thin film 21, it is preferred that the temperature for restraint heating is a temperature in the range of from 60 to less than 450°C.
The upper limit of the heat treatment temperature is determined because of about 450°C which is the heat resistance temperature of polyimide. The lower limit of the heat treatment temperature is determined from the creep deformation starting temperature obtained from the graph of Fig. 5.
Fig. 5 is a graph showing a change with temperature of the load required for maintaining the 2% tensile deformation of a polyimide film (Kapton 100EN (registered trademark of DuPont-Toray Co., Ltd.)). Fig. 5 shows the measured values (thick solid line) as well as values in the case where there is no stress relaxation (dotted line) and values indicating the stress relaxation due to thermal expansion (broken line), which are presumed from the measured values at 50°C or lower, and the rate of the stress relaxation due to thermal expansion and the rate of the stress relaxation due to creep deformation are indicated by arrows. An intersectional point at which the line introduced from the slope of the measured values in the range of from 50°C to 100°C and the line for the values indicating the stress relaxation due to thermal expansion (broken line), which are presumed from the measured values at 50°C or lower, cross each other is the creep deformation starting temperature, which is 60°C. When a stress is continuously exerted to the film in the high temperature range of 60°C or more, the form of the polymer chains flows under the stress so that it becomes in the state of equilibrium, causing creep deformation in which the shape changes. The increase of the temperature for heat treatment can further increase the plastic strain due to creep.

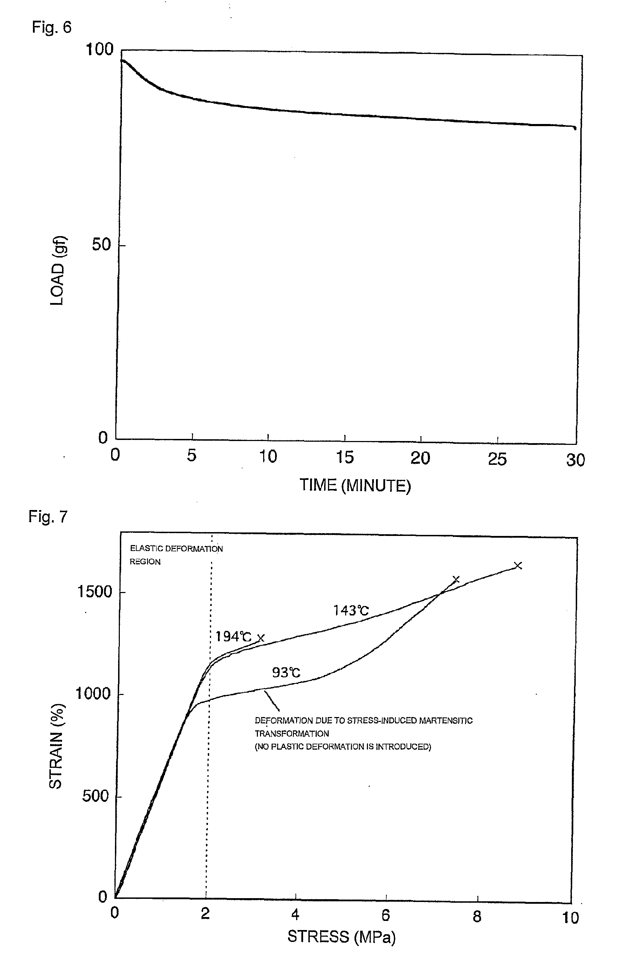

Fig. 6 is a graph showing a change with time of the load required for maintaining the 2% tensile deformation at 200°C of a polyimide film (Kapton 100EN (registered trademark of DuPont-Toray Co., Ltd.)).
As can be seen from Fig. 6, when a load is continuously applied to the polyimide film at 200°C, creep deformation gradually occurs, so that plastic deformation is introduced to the film. In other words, maintaining the polyimide film at the heating temperature can further increase the plastic strain.

The shape memory alloy thin film 22 belongs to the elastic deformation region at a temperature in the range of from the creep deformation starting temperature of the resin thin film 21 to lower than the heat resistance temperature of the resin thin film 21.
Fig. 7 is a graph showing stress-strain curves of a Ti_{48.5}Ni_{51.5} alloy thin film at 93°C, 143°C, and 194°C. As shown in Fig. 7, the stress-strain curve at each temperature has a strain at the transfer from the elastic deformation to the plastic deformation (hereinafter, elastic limit). At temperatures of 143°C and 194°C, the elastic limit is caused due to plastic deformation at a strain of about 2.0%. On the other hand, at a temperature of 93°C, deformation due to stress-induced martensitic transformation starts during the elastic deformation, and no plastic deformation is introduced to the film at a strain of about 2.0%. That is, the shape memory alloy thin film at a strain of less than 2% belongs to the elastic deformation region at a temperature in the range of from 93°C to 194°C.
A TiNiCu alloy thin film has the similar properties, and the TiNiCu alloy thin film belongs to the elastic deformation region at a temperature in the range of from the creep deformation starting temperature of the resin thin film 21 to lower than the heat resistance temperature of the resin thin film 21.

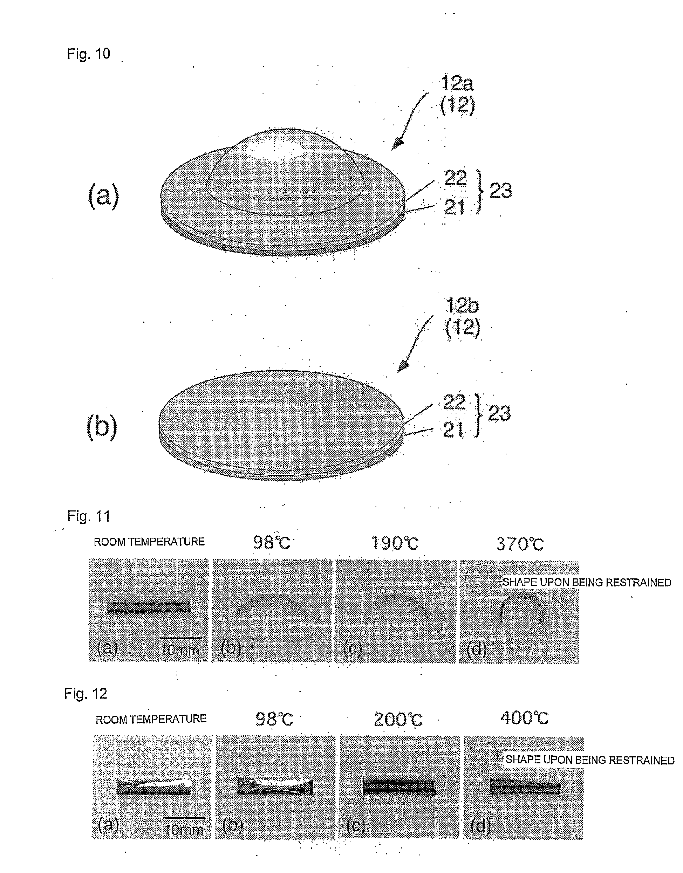

As shown in Fig. 12(a) to Fig. 12(d) for the below-described Test Examples 5 to 8, the shape of the shape memory alloy thin film at 400°C or lower is unchanged, and therefore it is not considered that the shape memory alloy thin film 22 suffers plastic deformation at a temperature in the range of lower than the heat resistance temperature of the resin thin film 21 to the extent that the resin thin film 21 does.

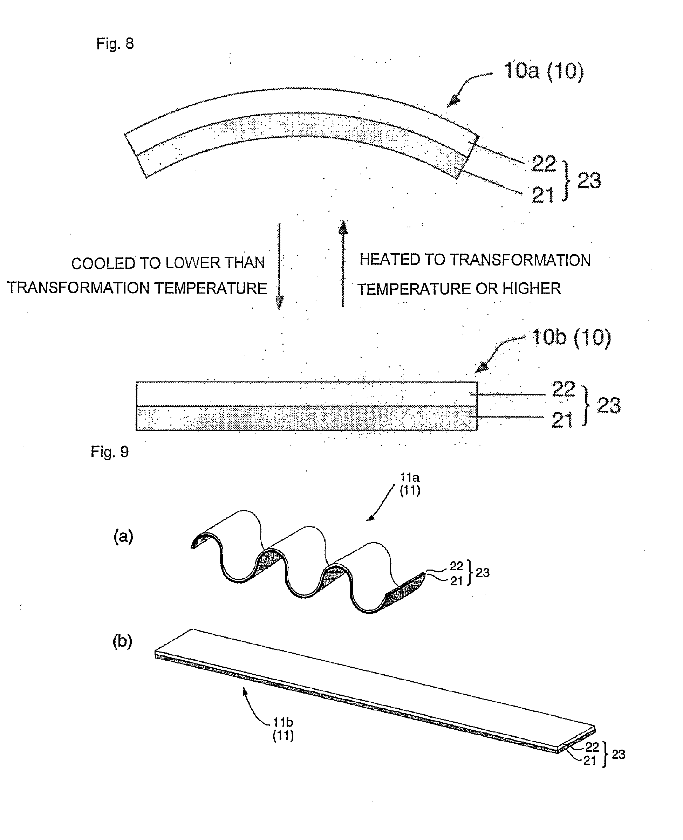

When restrained at a temperature of the creep deformation starting temperature of the resin thin film 21 or higher and lower than the heat resistance temperature of the resin thin film 21, the shape memory alloy thin film 22 belongs to the elastic deformation region, but the resin thin film 21 suffers plastic deformation due to creep.
For this reason, when released from the restraint, a difference in shape between the shape memory alloy thin film 22 in the parent phase state and the resin thin film 21 at the transformation temperature or higher causes an internal stress, so that the stacked thin film 23 is curved as shown in Fig. 8 (curved shape 10a). When the shape memory alloy thin film 22 is then cooled to lower than the transformation temperature to change the phase of the film to a martensite phase, the above-mentioned internal stress serves as a bias force to cause the shape memory alloy thin film 22 to change in shape so as to relax the strain, so that the thin film actuator 10 becomes in a nearly flat shape as shown in Fig. 8 (flat shape 10b). The change of the stacked thin film 23 in shape caused by the phase transformation is reversible by heating and cooling the film, and thus the thin film actuator exhibits a two-way shape memory effect.

In Fig. 8, the stacked thin film 23 is curved so that the curvature center is present on the resin thin film 21 side, but the bending direction is not limited to this, and the stacked thin film 23 may be curved so that the curvature center is present on the shape memory alloy thin film 22 side.

On the other hand, when restrained at a temperature of lower than the creep deformation starting temperature of the resin thin film 21, it is impossible to cause the resin thin film 21 to suffer plastic deformation, and both the shape memory alloy thin film and the resin thin film belong to the elastic deformation region. Therefore, when released from the restrained state, the size and shape of the stacked thin film go back to those before the restraint heating.
Further, when the resin thin film 21 suffers no plastic deformation, no internal stress is exerted to the shape memory alloy thin film 22, and therefore, even when heating and cooling the stacked thin film 23, it is impossible to change the shape of the stacked thin film 23.

When restrained at a temperature of the heat resistance temperature of the resin thin film 21 or higher, the resin thin film 21 suffers destruction, causing the structure of the resin thin film 21 to be unstable. As a result, the change of shape of the stacked thin film 23 cannot be controlled.

Thus, a thin film actuator can be produced through the above-described steps from the stacked thin film 23 in a flat shape having no internal stress immediately after formed, and the thin film actuator has an internal stress between the resin thin film 21 and the shape memory alloy thin film 22 and exhibits a two-way shape memory effect shown in Fig. 8 by virtue of the bias force caused due to the internal stress.

### (Second embodiment of the invention)

Next, a thin film actuator in the second embodiment of the invention is described below.
Fig. 9(a) and Fig. 9(b) are perspective views showing a thin film actuator in the second embodiment of the invention.
As shown in Fig. 9(a) and Fig. 9(b), a thin film actuator 11 comprises a stacked thin film 23 having stacked on one another a resin thin film 21 in a rectangular form as viewed on the plane and a shape memory alloy thin film 22 in a rectangular form as viewed on the plane.
The thin film actuator 11 at the transformation temperature of the shape memory alloy thin film 22 or higher has a corrugated shape 11a having protrusions and depressions which respectively protrude and depress in the direction perpendicular to a plane defined by the long axis and short axis of the film, and which are alternately arranged in the direction of the long axis. The protrusions and depressions are changed to a flattened shape 11 b by cooling the thin film actuator 11 to lower than the transformation temperature of the shape memory alloy thin film 22. This change in shape is reversible by heating and cooling the thin film actuator, and thus the actuator exhibits a two-way shape memory effect.

### (Third embodiment of the invention)

A thin film actuator in the third embodiment of the invention is descried below.
Fig. 10 is a perspective view showing a thin film actuator in the second embodiment of the invention.
As shown in Fig. 10, a thin film actuator 12 comprises a stacked thin film 23 having a disc-form resin thin film 21 and a disc-form shape memory alloy thin film 22 stacked on one another.
The thin film actuator 12 at the transformation temperature of the shape memory alloy thin film 22 or higher has a shape 12a having in the center portion thereof a hemispherical protruding portion protruding to the shape memory alloy thin film 22 side. The protruding portion is changed to a flattened shape 12b by cooling the thin film actuator 12 to lower than the transformation temperature of the shape memory alloy thin film 22. This change in shape is reversible by heating and cooling the thin film actuator, and thus the actuator exhibits a two-way shape memory effect.

The method of the invention for producing the thin film actuators 10, 11, 12 has a construction such that the stacked thin film 23 having the resin thin film 21 and the shape memory alloy thin film 22 stacked on one another is fixed to a shaping die member and heated and maintained in a state in which the resultant shape of the stacked thin film is restrained, and therefore there can be produced the thin film actuators 10, 11, 12 each comprising the stacked thin film 23 having stacked on one another the resin thin film 21, which has been changed in shape due to creep deformation, and the shape memory alloy thin film 22, which has suffered only elastic deformation and has not been changed in shape, and thus there can be provided a thin film actuator which is advantageous not only in that the thin film actuator can be largely changed in shape and easily controlled in the magnitude and direction of the change of shape, but also in that the thin film actuator is suppressed with respect to the deterioration of performance caused due to the use of the actuator.

The method of the invention for producing the thin film actuators 10, 11, 12 has a construction such that the stacked thin film 23 is fixed to one side of the die member 31 by the fixing member 36 in a state in which the stacked thin film 23 is pressed against the one side of the die member 31, and therefore a thin film actuator in an arbitrary shape can be easily formed.

The method of the invention for producing the thin film actuators 10, 11, 12 has a construction such that the die member 31 has the convex portion 31 a on one side thereof and the fixing member 32 has the concave portion 32b, wherein the concave portion 32b is fitted to the convex portion 31 a in a state in which the stacked thin film 23 is pressed against one side of the die member 31 to fix the stacked thin film 23 to the one side of the die member 31, and therefore a thin film actuator in a complicated shape can be more easily formed.

The method of the invention for producing the thin film actuators 10, 11, 12 has a construction such that the shape of the stacked thin film is restrained so that the strain of the stacked thin film 23 becomes less than 2%, and therefore the shape memory alloy thin film suffers no plastic deformation, making it possible to accurately control the direction and movement of the change of shape of the thin film actuator.

The method of the invention for producing the thin film actuators 10, 11, 12 has a construction such that the stacked thin film 23 is formed by depositing the shape memory alloy thin film 22 on the resin thin film 21, and therefore a stacked thin film actuator having accurately controlled direction and movement of the change of shape can be easily formed.

The method of the invention for producing the thin film actuators 10, 11, 12 has a construction such that the stacked thin film 23 is formed by applying the resin thin film 21 to the shape memory alloy thin film 22 or by bonding the resin thin film 21 to the shape memory alloy thin film 22 using a bonding agent, and therefore not only can the thickness of the film be accurately controlled, but also the dispersion of the film thickness in the plane is controlled, making it possible to accurately control the direction and movement of the change of shape of the thin film actuator.

The method of the invention for producing the thin film actuators 10, 11, 12 has a construction such that the resin thin film 21 is a polyimide film, and therefore the resin thin film which has suffered plastic deformation due to creep can be easily formed, and there can be produced a thin film actuator which is suppressed with respect to the deterioration of performance caused due to the use of the actuator.

The method of the invention for producing the thin film actuators 10, 11, 12 has a construction such that the temperature for restraint heating is a temperature in the range of from 60°C to less than 450°C, and therefore a stacked thin film comprising a resin thin film, which has been changed in shape due to creep deformation, and a shape memory alloy thin film, which has suffered only elastic deformation and has not been changed in shape, can be formed, thus providing a thin film actuator which can be largely changed in shape and easily controlled in the magnitude and direction of the change of shape.

The method of the invention for producing the thin film actuators 10, 11, 12 has a construction such that the shape memory alloy thin film 22 is a TiNi alloy thin film or a TiNiCu alloy thin film, and therefore the shape memory alloy thin film suffers no plastic deformation, and thus there can be produced a thin film actuator which is advantageous not only in that the direction and movement of the change of shape of the thin film actuator can be accurately controlled, but also in that the thin film actuator is suppressed with respect to the deterioration of performance caused due to the use of the actuator.

The thin film actuators 10, 11, 12 in the invention have a construction such that the total thickness of the shape memory alloy thin film and the resin thin film is less than 400 µm, and therefore there can be provided a thin film actuator which is advantageous in that the thin film actuator can be largely changed in shape without causing the shape memory alloy thin film to suffer plastic deformation and easily controlled in the magnitude and direction of the change of shape.

The thin film actuators 10, 11, 12 in the invention have a construction such that one or more layers of another thin film are stacked on the stacked thin film 23, and therefore there can be provided a thin film actuator which has added thereto an electrode layer or a surface protective layer, or which enables multistage change in shape.

The method for producing a thin film actuator according to the embodiment of the invention is not limited to the above-mentioned embodiments, and can be changed or modified within the range of the technical concept of the invention. The embodiment will be described in more detail with reference to the following Examples, which should not be construed as limiting the scope of the invention.

### Examples

### (Test Examples 1 to 4)

### [Resin thin film]

As a resin thin film, four polyimide films (Kapton 100EN (registered trademark of DuPont-Toray Co., Ltd.)) in a rectangular form as viewed on the plane, each having a length of 20 mm, a width of 3 mm, and a thickness of 25 µm, were first prepared.
Then, one of the above resin thin films was wound round a cylindrical stainless steel tube having an outer diameter of 7 mm, and the film in the fixed state was allowed to stand at room temperature for one hour, and then the resultant resin thin film was released from the stainless steel tube to prepare Test Example 1.
Next, Test Example 2 was prepared in substantially the same manner as in Test Example 1 except that the resin thin film was allowed to stand in an oven at 98°C for one hour.
Test Example 3 was prepared in substantially the same manner as in Test Example 1 except that the resin thin film was allowed to stand in an oven at 190°C for one hour.
Test Example 4 was prepared in substantially the same manner as in Test Example 1 except that the resin thin film was allowed to stand in an oven at 370°C for one hour.

Then, the shapes of the resin thin films were individually photographed.
Fig. 11(a) to Fig. 11(d) show respective photographs of the shapes of the resin thin films (Test Examples 1 to 4). The Test Example 1, which had been treated at room temperature, was changed in shape back to the shape before the restraint heating. In contrast, the Test Examples 2 to 4, which had been heat-treated respectively at 98°C, 190°C, and 370°C, suffered plastic deformation due to creep. The shape of the Test Example 4, which had been heat-treated at 370°C, was the closest to the shape of the film being restrained.

### (Test Examples 5 to 8)

### [Shape memory alloy thin film]

Next, as a shape memory alloy thin film, four Ti_{49.6}Ni_{34.9}Cu_{15.5} alloy thin films in a rectangular form as viewed on the plane, each having a length of 20 mm, a width of 3 mm, and a thickness of 8 µm, were prepared.
Then, one of the above shape memory alloy thin films was wound round a cylindrical stainless steel tube having an outer diameter of 7 mm, and the film in the fixed state was allowed to stand at room temperature for one hour, and then the resultant shape memory alloy thin film was released from the stainless steel tube to prepare Test Example 5.
Then, another one of the above shape memory alloy thin films was wound round the stainless steel tube, and the film in the fixed state was allowed to stand in an oven at 98°C for one hour, and then the resultant shape memory alloy thin film was released from the stainless steel tube. Subsequently, for observing the shape of the film in the parent phase state, the film was heated to 100°C and then cooled to prepare Test Example 6.
Next, Test Example 7 was prepared in substantially the same manner as in Test Example 6 except that the shape memory alloy thin film was allowed to stand in an oven at 200°C for one hour.
Test Example 8 was prepared in substantially the same manner as in Test Example 6 except that the shape memory alloy thin film was allowed to stand in an oven at 400°C for one hour.

Then, the shapes of the shape memory alloy thin films were individually photographed.
Fig. 12(a) to Fig. 12(d) show respective photographs of the shapes of the shape memory alloy thin films (Test Examples 5 to 8). Each of the shape memory alloy thin films was changed in shape back to the flat shape before the restraint heating.

### (Example)

### [Stacked thin film]

Next, a polyimide (Kapton 100EN (registered trademark of DuPont-Toray Co., Ltd.)) film having a thickness of 25 µm was prepared, and attached to a substrate holder in the chamber of a carousel type multi-target magnetron sputtering apparatus having Ti, Ni, and Cu targets, and then the inside of the chamber was evacuated.
Then, the polyimide film was heated to 310°C, and the Ti, Ni, and Cu targets were sputtered at predetermined powers for 150 minutes in a state in which the substrate holder was rotated at 60 rpm to deposit a crystalline Ti_{48.5}Ni_{33.5}Cu₁₈ alloy thin film having a thickness of 8 µm on the polyimide film. In this instance, the predetermined powers were 1,000 W, 219 W, and 82 W, respectively, for the Ti, Ni, and Cu targets. The thermal expansion coefficient of Kapton 100EN is close to the thermal expansion coefficient of the shape memory alloy thin film, as compared to the thermal expansion coefficient of Kapton 100H (registered trademark of DuPont-Toray Co., Ltd.) described in Non-patent Literature 1 (the thermal expansion coefficients of 100H, 100EN, and the shape memory alloy thin film are 27 ppm/K, 16 ppm/K, and 10 ppm/K, respectively), and therefore deflection due to thermal strain or the like is unlikely to be caused upon heating the substrate during the deposition, making it possible to easily form a thin film stable in shape.
Thus, a stacked thin film having stacked on one another a polyimide (Kapton 100EN (registered trademark of DuPont-Toray Co., Ltd.)) film having a thickness of 25 µm and a Ti_{48.5}Ni_{33.5}Cu₁₈ alloy thin film having a thickness of 8 µm was formed through the above steps.
The composition of the alloy was identified by ICP (atomic absorption spectrometry).

Fig. 13(a) to Fig. 13(d) show photographs of the stacked thin film obtained after deposited.
Fig. 13(a) is a photograph of the stacked thin film obtained after deposited, as taken from the top at room temperature (26°C). The stacked thin film was not curved but flat.
Fig. 13(b) is a photograph of the stacked thin film obtained after heated to 100°C, as taken from the side. The stacked thin film was slightly curved so that the curve had a curvature center on the polyimide side, and exhibited a two-way shape memory effect by heating and cooling the film in the range between room temperature (26°C) and 100°C. However, the change of the shape caused when heated to 100°C was as small as 10.5 mm in terms of a curvature radius. The two-way shape memory effect seen in Fig. 13(b) is obtained from the thermal strain caused when the stacked thin film is cooled from the deposition temperature to room temperature.

Next, the stacked thin film was wound round a stainless steel tube having an outer diameter of 7 mm (restrained at a curvature radius of 3.5 mm), and the film in the wound state was maintained at 150°C for 20 minutes to prepare a stacked thin film which had been subjected to restraint heating (thin film actuator in Example).
Fig. 14(a) is a photograph of the thin film actuator in Example, as taken from the side at room temperature (26°C). The stacked thin film was slightly curved but almost flat.
Fig. 14(b) is a photograph of the thin film actuator in Example obtained after heated to 100°C, as taken from the side. The stacked thin film was curved so that the curve had a curvature center on the polyimide side. In this case, the curvature radius was 7.5 mm, which indicates that the change of shape was increased, as compared to that of the stacked thin film obtained after deposited.
That is, the restraint heating enabled the thin film actuator in Example to largely change in shape.
Further, the thin film actuator in Example was reversibly changed in shape by heating and cooling the actuator in the range between room temperature (26°C) and 100°C, and exhibited a two-way shape memory effect.

### Industrial Applicability

The method for producing a thin film actuator of the invention relates to a method for producing a thin film actuator which is advantageous not only in that the thin film actuator can be largely changed in shape and easily controlled in the magnitude and direction of the change of shape, but also in that the thin film actuator is suppressed with respect to the deterioration of performance caused due to the use of the actuator, and is applicable to the device industry in which a thin film actuator is produced and used, and the like.

### Description of Reference Numerals

10: Thin film actuator
10a: Curved shape
10b: Flat shape
11: Thin film actuator
11 a: Corrugated shape
11b: Flattened shape
12: Thin film actuator
12a: Shape having a protruding portion
12b: Flattened shape
21: Resin thin film
22: Shape memory alloy thin film
23: Stacked thin film
31: Die member
31 a: Convex portion
32: Fixing member
32b: Concave portion
35a; 35b: Screw
36: Fixing member
ε: Maximum strain
t: Thickness of the thin film
r: Curvature radius

## Claims

1. A method for producing a thin film actuator, which comprises fixing a stacked thin film having a resin thin film and a shape memory alloy thin film stacked on one another to one side of a shaping die member, and heating the stacked thin film in a state in which the resultant shape of the stacked thin film is restrained to a temperature which is the softening temperature (creep deformation starting temperature) of the resin thin film or higher and lower than the heat resistance temperature of the resin thin film and maintaining the stacked thin film at the temperature to cause only the resin thin film to suffer predetermined creep deformation.

2. The method for producing a thin film actuator according to claim 1, wherein the stacked thin film is fixed to one side of the die member by a fixing member in a state in which the stacked thin film is pressed against the one side of the die member.

3. The method for producing a thin film actuator according to claim 2, wherein the die member has a convex portion on one side thereof and the fixing member has a concave portion, wherein the concave portion is fitted to the convex portion in a state in which the stacked thin film is pressed against one side of the die member to fix the stacked thin film to the one side of the die member.

4. The method for producing a thin film actuator according to any one of claims 1 to 3, wherein the shape of the stacked thin film is restrained so that the strain of the stacked thin film becomes less than 2% which is the elastic limit of the shape memory alloy thin film.

5. The method for producing a thin film actuator according to any one of claims 1 to 4, wherein the stacked thin film is formed by depositing the shape memory alloy thin film on the resin thin film.

6. The method for producing a thin film actuator according to any one of claims 1 to 4, wherein the stacked thin film is formed by applying the resin thin film to the shape memory alloy thin film or by bonding the resin thin film to the shape memory alloy thin film using a bonding agent.

7. The method for producing a thin film actuator according to any one of claims 1 to 6, wherein the resin thin film is a polyimide film.

8. The method for producing a thin film actuator according to any one of claims 1 to 7, wherein the temperature for restraint heating is a temperature in the range of from 60°C to less than 450°C.

9. The method for producing a thin film actuator according to any one of claims 1 to 8, wherein the shape memory alloy thin film is a TiNi alloy thin film or a TiNiCu alloy thin film.

10. The method for producing a thin film actuator according to any one of claims 1 to 9, wherein the total film thickness of the shape memory alloy thin film and the resin thin film is less than 400 µm.

11. The method for producing a thin film actuator according to any one of claims 1 to 10, wherein one or more layers of another thin film are stacked on the stacked thin film.
